# EUROPEAN PATENT SPECIFICATION

(11) **EP 3 166 362 B1**
(45) Date of publication and mention of the grant of the patent: **23.10.2019**
(21) Application number: 15193407.2
(22) Date of filing: 06.11.2015
(51) Int. Cl.: H04W 60/00, H04M 15/00, H04W 4/24, H04W 8/06

(54) **METHOD AND NETWORK ELEMENT FOR PROVIDING A REGISTRATION TO A COMMUNICATION NETWORK FOR A MOBILE TERMINAL**
VERFAHREN UND NETZWERKELEMENT ZUR BEREITSTELLUNG EINER REGISTRIERUNG AN EIN KOMMUNIKATIONSNETZWERK FÜR EIN MOBILES ENDGERÄT
PROCÉDÉ ET ÉLÉMENT DE RÉSEAU POUR FOURNIR UN ENREGISTREMENT À UN RÉSEAU DE COMMUNICATION POUR UN TERMINAL MOBILE

(43) Date of publication of application: 10.05.2017
(73) Proprietor: Vodafone GmbH, 40549 Düsseldorf (DE)
(72) Inventor: Kulakov, Alexej, 40595 Düsseldorf (DE); Caldenhoven, Jürgen, 40547 Düsseldorf (DE); Wild, Peter, 47807 Krefeld (DE); Lu, Yang, 40489 Düsseldorf (DE)
(74) Representative: Ring & Weisbrodt

(56) References cited:
- US-A1- 2012 320 801
- US-A1- 2014 335 830

## Description

The invention relates to a method for providing a registration to a communication network for a mobile terminal, preferably during a mobility management procedure.

The invention further relates to a network element for providing a registration to a communication network for a mobile terminal, preferably during a mobility management procedure, which is particularly adapted to perform the method steps according to the invention performed by such a network element.

When a mobile terminal attempts to register or attach to a communication network the mobile terminal initiates a multi-stage registration or attaching procedure according to the telecommunications standards. This standardized procedure is mandatory structured in a mobility management part and a session management part.

In a fourth generation (4G) communication network, respectively a Long Term Evolution (LTE) communication network, the mobile terminal sends a registration request (attach request message) to the 4G communication network. This registration request contains for example the mobile terminal's identifier, especially an International Mobile Subscription Identifier (IMSI) or a virtual International Mobile Subscription Identifier (vIMSI). This registration request starts the mobility management procedure between the 4G communication network and the mobile terminal. The responsible network element of the 4G communication for running this procedure is the mobility management entity (MME).

After receiving the registration request the mobility management entity (MME) initiates a procedure to authenticate the mobile terminal and to set up a secure communication between the mobile terminal and the mobility management entity (MME). Then, the mobility management entity (MME) sends a location update message to the home subscriber server (HSS) of the 4G communication network. The mobility management entity (MME) receives information about the subscribed services of the mobile terminal and/or the user of the mobile terminal from the home subscriber server (HSS) and the home subscriber server (HSS) stores the location information of the mobile terminal in its database.

At this stage the 4G communication network has only identified and authenticated the mobile terminal's identity and location, the mobile terminal's capabilities and the subscribed services of the mobile terminal and/or the user of the mobile terminal. However, for completing the mobile terminal's registration to the 4G communication network more information is still needed regarding the credit or budget status related to the subscribed services of the mobile terminal.

According to the standardized procedure the mobility management entity (MME) initiates an enhanced packet system (EPS) session for checking the credit or budget status of the mobile terminal and/or the user of the mobile terminal. During the EPS session the 4G communication network allocates the necessary network resources for the mobile terminal. The mobility management entity (MME) establishes an EPS bearer service between a packet data network gateway (PGW) of the 4G communication network and the mobility management entity (MME) and also transmits the information related to the mobile terminal to the packet data network gateway (PGW) by sending a create session request message. The packet data network gateway (PGW) extracts the information relating to the mobile terminal from this message and sends a credit control request message either an offline charging system (OFCS) or an online charging system (OCS) via to a policy and charging rules function (PCRF) of the communication network for checking if there is a valid budget for the mobile terminal based on the subscribed services and location in a home or visited communication network.

Patent document US2012/320801 A1 discloses methods for improved credit validation at a service request of a UE in a communication network.

Patent document US2014/335830 A1 discloses methods for improving the efficiency and timeliness of UE attachment to an E-UTRAN communication network.

For a valid budget of the mobile terminal a positive credit control answer message is returned to the packet data network gateway (PGW). The packet data network gateway (PGW) includes the positive result in its answer message to the mobility management entity (MME). Finally, the mobility management entity (MME) responds to the mobile terminal by sending an attach accept message and the registration request of the mobile terminal is acknowledged.

If no valid budget or credit of the mobile terminal a negative credit control answer message is returned containing a cause code, for example "#92", which means "User authentication failed", to the packet data network gateway (PGW). The packet data network gateway (PGW) forwards this negative answer to the mobility management entity (MME) by sending a negative create session response comprising the cause code, for example "#92", which means "User authentication failed". The mobility management entity (MME) extracts this cause code from the received message and sends an attach reject message with a reject cause code, for example "#19", which means "ESM failure" and the reject cause code, for example "#92", which means "User authentication failed" to the mobile terminal. The registration request is rejected and the mobile terminal is not connected to the communication network.

Thus, when a mobile terminal and/or a user of the mobile terminal tries to register to a communication network and the user has no valid credit or budget for the subscribed services this consequently results in a failed registration. The user of the mobile terminal will disadvantageously not receive the real reason of failure, namely the failed credit status check. The user will only receive the information that his authentication failed. Based on the given information of failure the user of the terminal is not able to change this disadvantageous situation. If the mobile terminal of the user stays in the 4G communication network it will repeat the registration procedure again and again with no success. Further, the communication network disadvantageously establishes a bearer service and unnecessarily allocates network ressources during the EPS session for completing the registration procedure for a mobile terminal, which at the end is rejected.

Therefore it is an object of the present invention to avoid the drawbacks of the prior art and to improve the registration procedure to a communication network for a mobile terminal regarding speed, quality and network resource utilisation and to improve the customer experience.

The object is achieved by a method according to claim 1 and an apparatus according to claim 12. Further embodiments are described in the dependent claims.

Examples are based on a separation of the credit check procedure from the mandatory session management procedure. This separation of the credit check procedure, by sending a query from the network element to the credit database, allows obtaining the mobile terminal's and/or the user's credit or budget status without the need to trigger a session management procedure. Triggering a session management procedure after the acknowledged registration request including credit check has the advantage that unnecessary allocation of network resources is avoided.

Furthermore, the integration of the at least one reason in the response from the network element to the mobile terminal enables the user of the mobile terminal to adapt his registration request or change his credit status so that a successful registration to the communication network is enabled. For example, the user can book an appropriate credit amount to his user account.

In an example after receiving the registration request of the mobile terminal at the network element, the the further steps are executed:
- extracting at the network element from the received registration request information relating to the mobile terminal and/or the user of the mobile terminal;
- checking a credit indication database related to the network element if the credit indication database comprises a credit indication related to the mobile terminal and/or the user of the mobile terminal; and
- if the credit indication database comprises the credit indication related to the mobile terminal and/or the user of the mobile terminal checking the credit indication whether the registration request can be directly acknowledged or whether the query must be sent from the network element to the credit database; and
- if the credit indication database does not comprise the credit indication related to the mobile terminal and/or the user of the mobile terminal or the check of the credit indication requires sending the query proceed with the step of sending the query from the network element to the credit database.

In a further advantageous example, it is proposed, that if the credit indication indicates that the mobile terminal has the conditional unlimited access to the communication network, further checking the conditions by the network element and/or the credit indication database whether the registration request can be directly acknowledged or whether the query must be sent from the network element to the credit database. The further check procedure with respect to the conditions of the conditional unlimited access at the network element or within the logic of the network element allows a faster registration of the mobile terminal, because it is performed at the network element much earlier than the credit check of the known procedure according to the telecommunications standards.

In a further example it is proposed, that the conditions to be further checked are based on the location of the mobile terminal and/or the user of the mobile terminal and/or the access network technology of the communication network in which the mobile terminal or the user of the mobile terminal is located. A condition can be based on tariff information regarding the user of a mobile terminal, for example the user has a valid flat roaming tariff. A flat roaming tariff indicates for example that the user is allowed to register to any visited public land mobile network for which the home network provider holds a corresponding roaming agreement with the visited network provider. If the mobile terminal and/or the user of the mobile terminal is located in a visited public land mobile network, using the inventive method allows registering the user of a mobile terminal in the visited public land mobile network at an early stage of the registration procedure.

A condition can further be based on information related to the access network technology of a communication network. Access network technology is to be understood for example as Wireless Lan-, WiMax-, 2G-, 3G-, 4G- or 5G-access technology. If the mobile terminal and/or the user of the mobile terminal is allowed to use a 3G access network of the communication network for example, using the inventive method allows registering the mobile terminal in the above case in any communication network based on 3G access network technology at an early stage of the registration procedure.

It is possible to combine the above mentioned conditions in any way when using the examples for enabling a registration at an early stage of the registration procedure, which is faster compared to the prior art procedures.

In a further example the mobile terminal and/or the user of the mobile terminal is located in a home public land mobile network (HPLMN) or in a visited public land mobile network (VPLMN). This corresponds to registering the user to the communication network in a non-roaming or roaming scenario.

In a further example it is proposed, that if the credit indication indicates that the mobile terminal has the restricted access to the communication network, proceed with the step of sending the query from the network element to the credit database.

In a further example the registration information of the registration request of the mobile terminal comprises at least a user identity, a radio access technology indicator and/or a visited communication network indicator for providing registration to the communication network. The usage of the registration information of the registration request according to the present invention allows and enables a faster registration procedure of the mobile terminal compared to the prior art registration procedures.

In a further example at least the query and the query answer are based on the standardised diameter protocol. Using a standardised protocol has the advantage that no further protocol stack has to be developed and/or implemented in the network element.

In a example the communication network is a communication network according to a telecommunications standard, preferably according to a Wireless Lan, WiMAX, 2G, 3G, 4G, or 5G telecommunications standard.

Further details, characteristics and advantages of the invention are explained in the following in more detail based on the description of the exemplary embodiments shown in the figures of the drawings.

In these figures:
- Fig. 1: shows a prior art signal flow diagram for a registration procedure according to 3GPP standard;
- Fig. 2: shows a signal flow diagram for an embodiment of a registration procedure according to the present invention;
- Fig. 3: shows a signal flow diagram for a further embodiment of a registration procedure according to the present invention;
- Fig. 4A: shows a schematic flow diagram for an embodiment of a registration procedure according to the present invention
- Fig. 4B: shows another schematic diagram of the embodiment shown in Fig. 4A
- Fig. 5: shows a structural diagram for an embodiment of a credit indication according to the present invention;
- Fig. 6: shows a structural diagram for an embodiment of the Budget Query Request and of the Budget Query Answer.

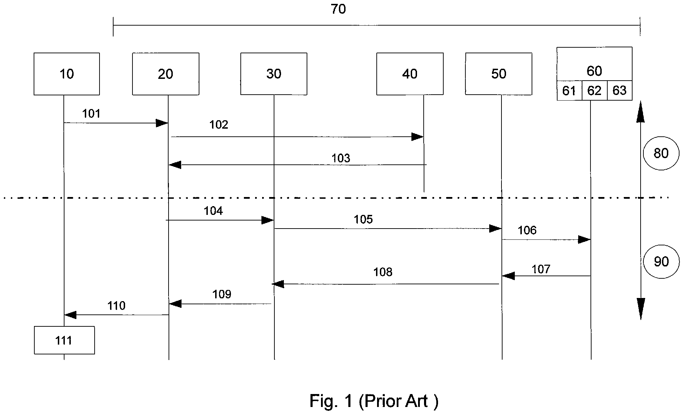

Fig. 1 shows a prior art signal flow diagram for an attach procedure according to 3GPP standard in which a mobile terminal 10, respectively user equipment (UE), attempts to register to a communication network 70.

For a non-roaming scenario the communication network 70 comprises a home public land mobile network (HPLMN). The home public land mobile network (HPLMN) comprises at least a mobility management entity (MME) 20, a signalling gateway (SGW) 30, a home subscriber server (HSS) 40, a packet data network gateway (PGW) 50 and a charging system 60. The charging system 60 comprises for example an online charging system (OCS) 61, an offline charging system (OFCS) 62 and a policy and charging rules function (PCRF) 63.

For a roaming scenario the communication network 70 comprises a visited public land mobile network (VPLMN) and a home public land mobile network (HPLMN). The visited land mobile network (VPLMN) comprises at least a mobility management entity (MME) 20 and a signalling gateway (SGW) 30. The home public land mobile network (HPLMN) comprises at least a home subscriber server (HSS) 40, a packet data network gateway (PGW) 50 and a charging system 60. The charging system 60 comprises for example an online charging system (OCS) 61, an offline charging system (OFCS) 62 and a policy and charging rules function (PCRF) 63.

The mobile terminal 10 is located in a LTE cell of the communication network 70 and sends a registration request 101, for example an attach request or tracking area update or location update, with at least its user identifier, respectively international mobile subscriber identity (IMSI), to the mobility management entity (MME) 20 with a piggybacked session management packet data network connectivity request message to the mobility management entity (MME) 20.

The mobility management entity (MME) 20 sends an update location request 102 comprising the user identifier and the location of the mobile terminal 10 in the communication network 70 to the home subscriber server (HSS) 40 for obtaining subscription information of the mobile terminal 10. During the mobility management procedure 80 the home subscriber server (HSS) 40 sends an update location answer 103 comprising the requested subscription information back to the mobility management entity (MME) 20. The mobility management entity (MME) 20 is now able to analyse what services are subscribed for the mobile terminal 10 based on the received subscription information.

The mobility management entity (MME) 20 establishes a session management procedure 90, which according to 3GPP standard is mandatory in the LTE communication network 70. Thus, the mobility management entity (MME) 20 sends a create session request message 104 to the signalling gateway (SGW) 30 for establishing a default bearer related to the mobile terminal 10. The mobility management entity (MME) 20 includes the subscription information it received from the home subscriber server (HSS) 40 in this create session request message 104. The signalling gateway (SGW) 30 sends the create session request 104 to the packet data network gateway (PGW) 50. The packet data network gateway (PGW) 50 can use the subscription information from the received create session request message 104, when requesting the charging system 60 for creating a session.

The packet data network gateway (PGW) 50 sends a credit control request message 106 to the charging system 60 for checking whether credit is available for the subscribed services of the mobile terminal 10. The charging system 60 responses to the packet data network gateway (PGW) 50 with a credit control answer message 107. This credit control answer message 107 may comprise a positive or negative answer. A negative answer would be given if the customer were not subscribed to the requested service.

Based on the credit control answer message 107 a packet data network gateway (PGW) 50 sends a create session response 108 comprising a cause code, in case of a negative answer the GPRS tunnelling protocol (GTP) cause code, for example "#92", which means "user authentication failed" back to the signalling gateway (SGW) 30. The signalling gateway (SGW) 30 sends the create session response 109 with the cause code "#92" to the mobility management entity (MME) 20.

The mobility management entity 20 sends an attach reject message 110 with EMM (EMM: EPS mobility management; EPS: Evolved Packet Systems) reject cause code, for example "#19", which means "ESM failure" and a piggybacked packet data network connectivity reject message 110 with a ESM (ESM: EPS session management) reject cause code, for example "#92", which means "user authentication failed" to the mobile terminal 10. The EPS session management (ESM) protocol provides procedures for handling of EPS bearer context. Cause code "#19" and cause code "#92" are used in the communication network 70 to indicate that the requested service is rejected by the external packet data network due to a failed user registration. With that the attach request is rejected from the communication network 70 perspective.

The mobile terminal 10 may then perform cell reselection or network search 111. If the mobile terminal 10 recites in the LTE cell of the 4G communication network 70 it will not get any service after several attempts of sending attach requests 101. This leads to an additional usage of signalling resources between the mobile terminal 10 and the communication network 70.

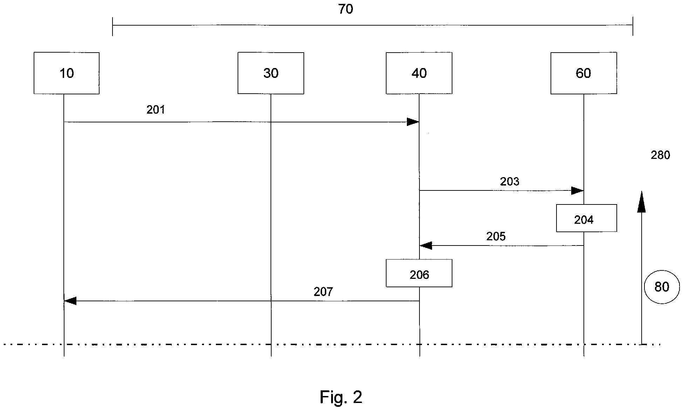

Fig. 2 depicts a signal flow diagram for a registration procedure according to the present invention. Entities as in Fig. 1 are indicated by the same numbers in Fig. 2.

The communication network 70 comprises at least a signalling gateway (SGW) 30, a network element 40 and a credit database 60.

For a non-roaming scenario the communication network 70 comprises at least a signalling gateway (SGW) 30, a network element 40 and a credit database 60. For a roaming scenario the communication network 70 comprises a visited public land mobile network (VPLMN) and a home public land mobile network (HPLMN). The visited land mobile network (VPLMN) comprises at least a signalling gateway (SGW) 30. The home public land mobile network (HPLMN) comprises at least a network element 40 and a credit database 60.

A mobile terminal 10 attempts to register to the communication network 70 and initiates a mobility management procedure 80.

The network element 40 receives a registration request 201 from the mobile terminal 10 via the signalling gateway (SGW) 30. The registration request 201 comprises registration information of the mobile terminal 10 and/or a user of the mobile terminal 10. The registration information of the registration request 201 of the mobile terminal 10 comprises at least for example a user identity, a radio access technology indicator and/or a visited communication network (VPLMN) indicator for providing registration to the communication network 70. The user identity may be for example a International Mobile Subscription Identification (IMSI).

The network element 40 sends a query 203 for checking the mobile terminal's budget to a credit database 60. The query 203 comprises at least partially the registration information from the registration request 201, like for example the user identity. The credit database 60 evaluates 204 whether the mobile terminal 10 has a valid budget based on the at least partially registration information of the query 203. As a result of the evaluation 204 the credit database 60 sends a positive or negative query answer 205 back to the network element 40.

The network element 40 analyses 206 the information regarding the result of the evaluation 204 in the received query answer 205. The network element 40 sends a request answer 207 in response to the registration request 201 to the mobile terminal 10 via the signalling gateway (SGW) 30. For a positive result of the evaluation 204 performed by the credit database 60 the registration request 201 is acknowledged and consequently the mobile terminal 10 is registered to the communication network 70. After the positive credit check and successful registration of the mobile terminal 10 the communication network 70 can initiate the allocating of network resources for the mobile terminal 10 for using network services.

For a negative result of the evaluation 204 the request answer 207 comprises the information that the registration request 201 is rejected together with a reason of the rejection, for example "no credit available". In the latter case the mobile terminal 10 is not registered to the communication network 70.

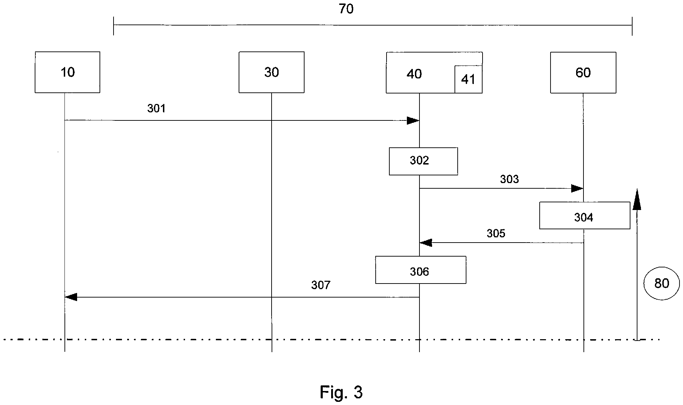

As an example the communication network 70 is a long term evolution (LTE) or 4G telecommunications network as depicted in Fig. 1. In this example the network element 40 comprises a subscription database or home subscriber server (HSS). Fig. 3 depicts a signal flow diagram for a further embodiment of a registration procedure according to the present invention. A mobile terminal 10 attempts to register to a communication network 70 during a mobility management procedure 80.

The structure of the communication network 70 is basically identical with the structure of the communication network of Fig. 2, except that the network element 40 of Fig. 3 comprises an integrated credit indication database 41. The credit indication database 41 comprises a credit indication related to the mobile terminal 10 and/or the user of the mobile terminal 10. A credit indication comprises information whether the mobile terminal 10 and/or the user of the mobile terminal 10 has an unlimited access to the communication network 70, a conditional unlimited access to the communication network 70 or a restricted access to the communication network 70.

The network element 40 receives a registration request 301 from the mobile terminal 10 via a signalling gateway (SGW) 30 of the communication network 70. The registration request 301 comprises registration information of the mobile terminal 10 and/or the user of the mobile terminal 10, which is identical to the registration information already described with respect to Fig. 2.

The network element 40 extracts information relating to the mobile terminal 10 and/or the user of the mobile terminal 10 from the received registration request 301. The network element 40 checks 302 if the credit indication database 41 comprises a credit indication related to the mobile terminal 10 and/or the user of the mobile terminal 10.

For a negative result of the check 302, which means that the credit indication database 41 does not comprise a credit indication related to the mobile terminal 10 and/or the user of the mobile terminal 10, the network element 40 sends a query 303 to the credit database 60. The query 303 comprises at least partially a registration information from the registration request 301, like for example the user identity. The credit database 60 evaluates 304 whether the mobile terminal 10 has a valid budget based on the at least partially registration information contained in the query 303. As a result of the evaluation 304 the credit database 60 sends a positive or negative query answer 305 back to the network element 40. Thus, the case that the credit indication database 41 does not comprise the credit indication for the mobile terminal 10 corresponds to the procedure described with respect to Fig. 2, except of checking the credit indication database 41.

If the credit indication database 41 comprises the credit indication related to the mobile terminal 10 and/or the user of the mobile terminal 10, the network element 40, respectively the logic of the network element 40, checks the credit indication whether the registration request 301 can be directly acknowledged or whether the query 303 must be send from the network element 40 to the credit database 60. This check involves, for example, the examination of the information contained in the credit indication whether the mobile terminal 10 and/or the user of the mobile terminal 10 has an unlimited access to the communication network 70, a conditional unlimited access to the communication network 70 or a restricted access to the communication network 70.

If the credit indication indicates that the mobile terminal 10 has the unlimited access to the communication network 70 the network element 40 will proceed with sending the request answer 307 from the network element 40 to the mobile terminal 10 via the signalling gateway (SGW) 30, in which the registration request 301 is acknowledged.

If the credit indication indicates that the mobile terminal 10 has the conditional unlimited access to the communication network 70 the network element 40 and/or the credit indication base 41 further checks 302 whether the registration request 301 can be directly acknowledged. The further check 302 involves, for example, the examination of the information contained in the credit indication whether the mobile terminal is allowed to register in the communication network 70 it is located in. If the result is positive the registration request 301 is directly acknowledged by the network element 40. If the further check 302 of the condition is negative, the credit status of the mobile terminal 10 needs to be checked and thus, the network element 40 sends the query 303 to the credit database 60.

If the credit indication indicates that the mobile terminal 10 has the restricted access to the communication network 70 the network element 40 proceed with the sending of the query 303 to the credit database 60.

As an example the communication network 70 is a long term evolution (LTE) or 4G telecommunications network as depicted in Fig. 1. In this example the network element 40 comprises a subscription database or home subscriber server (HSS).

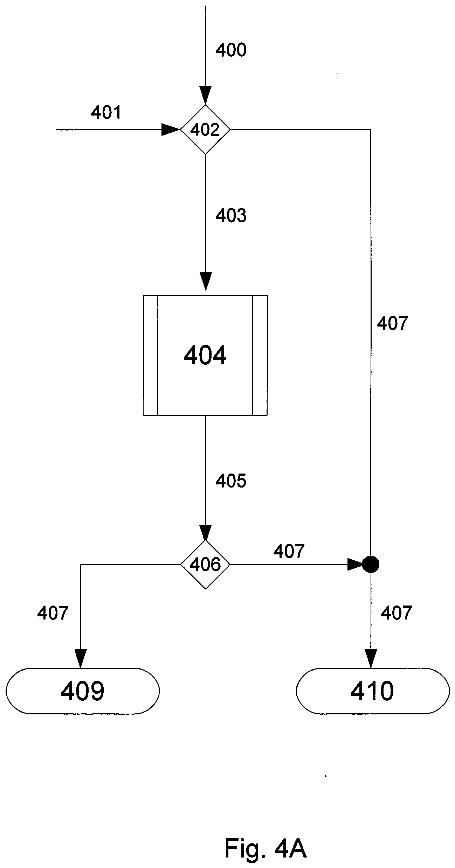

Fig. 4A depicts a schematic flow diagram of a further embodiment according to the present invention.

Fig. 4A represents a schematic flow of messages or activities between a mobile terminal 10 and/or a user of the mobile terminal 10 and a communication network 70 attempting to register to the communication network 70 according to Fig. 3.

A credit indication is added by means of an administration tool to a credit indication database 41 via a network element 40 with activity or message 400. For example, the administration tool can be part of a customer database (not shown) of the communication network 70, which adds or loads the credit indication via an interface (not shown) into the credit indication database 41. Alternatively, the administration tool is a credit indication database administration tool, which is responsible for adding the credit indication to the credit indication database 41. It is also possible that the administration tool is a part of the network element 40, for example a subscription database of a 4G communication network, which is controlling and/or administrating data input and output for the network element 40 and/or the credit indication database 41.

A registration request 401 from the mobile terminal 10 is received by the network element 40. The registration request 401 comprises registration information related to the mobile terminal 10 and/or the user of the mobile terminal 10. For example, the registration information comprises a user identity (user-ID), such as an international mobile subscription identification (IMSI), an identification related to the visited communication network 70 (PLMN-ID), location information of the mobile terminal 10 (location ID or cell-ID) and/or application/service information related to the mobile terminal 10 and/or the user of the mobile terminal 10.

Box 402 shows the analysing and decision-making process in the network element 40, for example the subscription database or a home subscriber server (HSS) of a 4G communication network 70. The network element 40 extracts the registration information from the received registration request 401 and checks 402 if the credit indication database 41 comprises a credit indication related to the mobile terminal 10 and/or the user of the mobile terminal 10. In case no credit indication is existent the network element 40 sends a query 403 for checking the budget or credit status of the mobile terminal 10.

If the credit indication database 41 comprises the credit indication related to the mobile terminal 10 and/or the user of the mobile terminal 10, the network element 40, respectively the logic of the network element 40, checks the credit indication whether the registration request 401 can be directly acknowledged or whether the query 403 must be send from the network element 40 to the credit database 60 as described with respect to Fig. 3. This check involves, for example, the examination of the information contained in the credit indication whether the mobile terminal 10 and/or the user of the mobile terminal 10 has an unlimited access to the communication network 70, a conditional unlimited access to the communication network 70 or a restricted access to the communication network 70.

If the credit indication indicates that the mobile terminal 10 has the unlimited access to the communication network 70 the network element 40 will proceed with sending the request answer 407 from the network element 40 to the mobile terminal 10 via the signalling gateway (SGW) 30, in which the registration request 401 is acknowledged.

If the credit indication indicates that the mobile terminal 10 has the conditional unlimited access to the communication network 70 the network element 40 and/or the credit indication base 41 further checks 402 whether the registration request 401 can be directly acknowledged. The further check 402 involves, for example, the examination of the information contained in the credit indication whether the mobile terminal is allowed to register in the communication network 70 it is located in. If the result is positive the registration request 401 is directly acknowledged by the network element 40. If the further check 402 of the condition is negative, the credit status of the mobile terminal 10 needs to be checked and thus, the network element 40 sends the query 403 to the credit database 60.

If the credit indication indicates that the mobile terminal 10 has the restricted access to the communication network 70 the network element 40 proceed with the sending of the query 403 to the credit database 60.

The evaluation process of the credit database 60 is shown with box 404. During this process the credit database 60 receives the query 403 from the network element 40 and extracts the registration information from the query 403. The credit database 60 evaluates whether the mobile terminal 10 has a valid budget or credit based on the at least partially registration information of the query 403. As a result of the evaluation the credit database 60 sends a positive or negative query answer 405 back to the network element 40 as described with respect to Fig. 3. The network element 40 analyses the result of the evaluation 406 in the received query answer 405. If a positive result of the evaluation 406 the network element 40 sends a positive request answer 407 back to the mobile terminal 10 as described with respect to Fig. 3. In 410 the registration request 401 is acknowledged as described with respect to Fig. 3 and the mobile terminal 10 is registered to the communication network 70. If a negative result of the evaluation 406 the request answer 407 comprises the information that the registration request 401 is rejected together with the reason of the rejection "no credit available". Therefore, in 409 the mobile terminal 10 is not registered to the communication network 70.

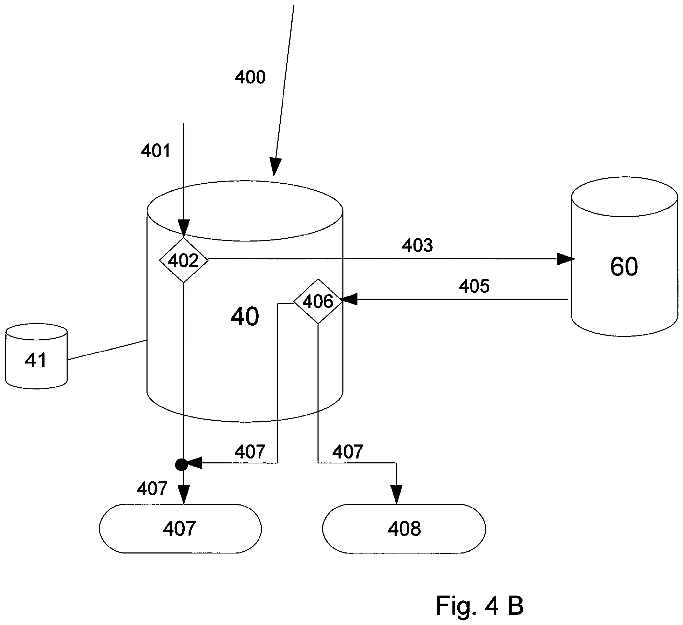

Fig. 4B shows another schematic diagram of the embodiment shown in Fig. 4A.

Fig. 4B shows the same process and messaging as described in Fig. 4A. The difference between Fig. 4A and Fig. 4B is that in Fig. 4B the network element 40, the credit database 60 and the credit indication database 41 related to the network element 40 are depicted as physical entities with respect to Fig. 3.

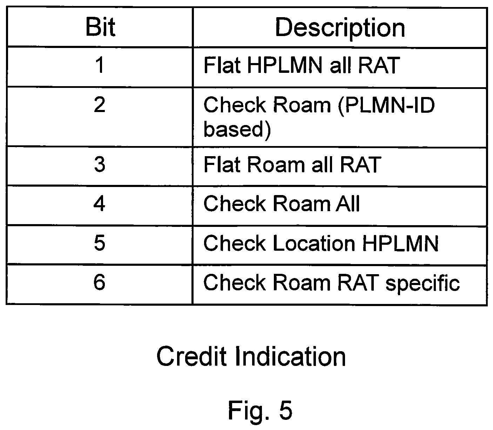

Fig. 5 shows an example of a credit indication as described with respect to Fig. 3 according to the present invention. The depicted credit indication has a length of six bits and comprises information about the details of the subscribed services. It basically contains "1" and "0" to indicate a specific information related to the mobile terminal 10 and/or the user of the mobile terminal 10. Alternatively, the length of the credit indication may advantageously contain less or more bits depending on the desired level of information relating to the mobile terminal 10 and/or the user of the mobile terminal 10.

A first bit of a credit indication for example indicates that the mobile terminal 10 has an unlimited access to the communication network 70, e.g. a home public land mobile network (HPLMN). A second bit of the credit indication indicates to check roaming dependent on the visited foreign communication network related to the mobile terminal 10. This second bit can trigger a query from the network element 40 to the credit database 60 as described with respect to Fig. 3. A third bit indicates an unlimited roaming via all network access technologies, for example 2G, 3G, 4G or 5G related to the mobile terminal 10. A fourth bit indicates a restricted or limited access based on the mobile terminal 10 in a roaming scenario. A fifth bit indicates to check the location of the mobile terminal 10 and/or the user of the mobile terminal 10 in a communication network 70 or the conditions of the location relating to the mobile terminal 10 as described with respect to Fig. 3, for example in the home public land mobile network (HPLMN). A sixth bit indicates to check a roaming depending on the network access technology used by the mobile terminal 10.

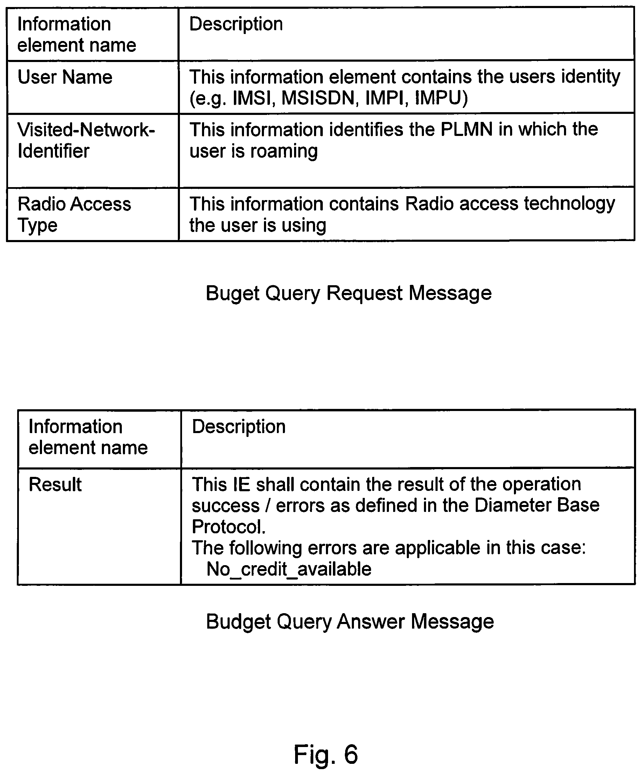

Fig. 6 depicts a structural diagram of an embodiment of the budget query request message 203, 303, 403 and of the budget query answer message 205, 305, 405 according to the present invention, for example as described with respect to Fig. 2, Fig.3, Fig. 4A and Fig.4B.

The budget query request message 203, 303, 403 or query and the budget query request answer message 205, 305, 405 or query answer are based on the standardised diameter protocol. Both messages are transmitted via an interface (not shown) between the network element 40 and the credit database 60 .

Both message types comprise at least one information element containing information related to the message type.

The budget query request message 203, 303, 403 comprises advantageously for example a user name information element, a visited network identifier information element and/or a radio access technology type information element.

The user name information element contains for example a user identity, for example an International Mobile Subscription Identifier (IMSI) or virtual International Mobile Subscription Identifier (vIMSI), a Mobile Station International Subscriber Directory Number (MSISDN), an IP Multimedia Private Identity (IMPI) or an IP Multimedia Public User Identifier (IMPU), relating to the mobile terminal 10 and/or the user of the mobile terminal 10.

The visited network identifier information element contains for example information about the public land mobile network (PLMN) in which the mobile terminal 10 and/ or the user of the mobile terminal 10 is roaming.

The radio access technology type information element contains for example information about the access technology the mobile terminal 10 and/or the user of the mobile terminal 10 is using.

It is possible to add further information elements to the budget query request message 203, 303, 403 dependent on the requirements of the network provider for advantageously enhancing the check procedure by the network element 40 and/or the credit indication database 41 as described with respect to Fig. 2, Fig.3, Fig. 4A and Fig.4B.

The budget query request answer message 205, 305, 405 comprises advantageously a result information element. The result information element comprises for example the result of the evaluation 204, 304, 404 by the credit database 60. The information element contains the result of the positive or negative evaluation as defined in the standardised diameter base protocol. It further comprises for example for a negative result of the evaluation 204, 304, 404 the error code or reason for the failure of the registration procedure, for example "no credit available".

### List of references:

- 10: Mobile Terminal or User Equipment (UE)
- 20: Mobility Management Entity (MME)
- 30: Signalling Gateway (SGW)
- 40: Network Element or Home Subscriber Server (HSS)
- 50: Packet Data Network Gateway (PGW)
- 60: Credit Database or Charging System
- 61: Online Charging System (OCS)
- 62: Offline Charging System (OFS)
- 63: Policy and Charging Rules Function (PCRF)
- 70: Home Public Land Mobile Network (HPLMN)
- 80: Mobility Management Procedure
- 90: Session Management Procedure
- 101: Send Attach Request Message
- 102: Update Location Request Message
- 103: Update Location Answer Message
- 104: Create Session Request Message
- 105: Create Session Answer Message
- 106: Credit Control Request Message
- 107: Credit Control Answer Message
- 108: Create Session Response Message
- 109: Create Session Response Message
- 110: Attach Reject Message
- 111: Cell re-selection and no service procedure
- 201: Registration Request
- 203: Query or Budget Query Request Message
- 204: Evaluation procedure at Credit Database
- 205: Query Answer or Budget Query Answer Message
- 206: Analysis and Evaluation at Network Element
- 207: Registration Request Answer
- 301: Registration Request
- 302: Check procedure for credit indication
- 303: Query or Budget Query Request Message
- 304: Evaluation procedure at Credit Database
- 305: Query Answer or Budget Query Answer Message
- 306: Analysis and Evaluation at Network Element
- 307: Registration Request Answer
- 400: Activity or message from administration tool
- 401: Registration Request
- 402: Analysing and decision-making process and check in the network element
- 403: Query
- 404: Evaluation or check in the credit database
- 405: Query answer
- 406: Analysis or check in the network element
- 407: Request answer

## Claims

1. Method performed by a system including a network element (40) being a subscription database of a communication network for providing a registration to the communication network (70) for a mobile terminal (10) which attempts to register or attach to the communication network, during a mobility management procedure (80), comprising the steps of:
- receiving, via a Signalling Gateway (30), a registration request (201, 301; 401) of the mobile terminal (10) at the subscription database of the communication network (70), wherein the registration request (201, 301, 401) comprises registration information of the mobile terminal (10);
- sending a query (203, 303, 403) from the subscription database to a credit database (60), wherein the query (203, 303, 403) comprises at least partially the registration information from the registration request (201, 301, 401);
- evaluating by the credit database (60) whether the mobile terminal has a valid budget based on the at least partially registration information of the query (203, 303, 403) and sending a query answer (205, 305, 405) as a result of the evaluation (204, 304, 404) to the subscription database, wherein for a negative result the query answer (205, 305, 405) comprises at least one reason of rejection; and
- sending a request answer (207, 307, 407) from the subscription database to the mobile terminal (10) in response to the registration request (201, 301, 401), wherein the registration request (201, 301, 401) is acknowledged or wherein the registration request (201, 301, 401) is rejected together with the at least one reason of rejection.

2. Method according to claim 1 comprising after receiving the registration request (201, 301, 401) of the mobile terminal (10) at the subscription database the further steps of:
- extracting at the subscription database from the received registration request (201, 301, 401) information relating to the mobile terminal (10) and/or the user of the mobile terminal (10);
- checking a credit indication database (60) related to the subscription database if the credit indication database (41) comprises a credit indication related to the mobile terminal (10) and/or the user of the mobile terminal (10); and
- if the credit indication database (60) comprises the credit indication related to the mobile terminal (10) and/or the user of the mobile terminal (10) checking the credit indication whether the registration request (201, 301, 401) can be directly acknowledged or whether the query (203, 303, 403) must be sent from the network element (10) to the credit database (60); and
- if the credit indication database (41) does not comprise the credit indication related to the mobile terminal (10) and/or the user of the mobile terminal (10) or the check of the credit indication (202, 302) requires sending the query (203, 303, 403) proceed with the step of sending the query (203, 303, 403) from the subscription database to the credit database (60).

3. Method according to claim 2, wherein the step of checking the credit indication (202, 302, 402) comprises the step of:
- checking the credit indication relating to the mobile terminal (10) and/or the user of the mobile terminal (10) if the credit indication comprises information whether the mobile terminal (10) and/or the user of the mobile terminal (10) has an unlimited access to the communication network (70), a conditional unlimited access to the communication network (70) or a restricted access to the communication network (70).

4. Method according to claim 3, wherein if the credit indication indicates that the mobile terminal (10) has the unlimited access to the communication network (70) proceed with sending the request answer (207, 307, 407) from the subscription database to the mobile terminal (10), wherein the registration request (201, 301, 401) is acknowledged.

5. Method according to claim 3, wherein if the credit indication indicates that the mobile terminal (10) has the conditional unlimited access to the communication network (70) further checking the conditions by the subscription database and/or the credit indication database (41) whether the registration request (201, 301, 401) can be directly acknowledged or whether the query (203, 303, 403) must be sent from the subscription database to the credit database (60).

6. Method according to claim 5, wherein the conditions to be further checked are based on the location of the mobile terminal (10) and/or the user of the mobile terminal (10) and/or the access network technology of the communication network (70) in which the mobile terminal (10) or the user of the mobile terminal (10) is located.

7. Method according to claim 6, wherein the mobile terminal (10) and/or the user of the mobile terminal (10) is located in a home public land mobile network(HPLMN) or in a visited public land mobile network (VPLMN).

8. Method according to claim 3, wherein if the credit indication indicates that the mobile terminal (10) has the restricted access to the communication network (70) proceed with the step of sending the query (203, 303, 403) from the subscription database to the credit database (60).

9. Method according to one of the claims 1 to 8, wherein the registration information of the registration request (201, 301, 401) of the mobile terminal (10) comprises at least a user identity, a radio access technology indicator and/or a visited communication network indicator for providing registration to the communication network (70).

10. Method according to one of the claims 1 to 9, wherein at least the query (203, 303, 403) and the query answer (205, 305, 405) are based on the standardised diameter protocol.

11. Method according to one of the claims 1 to 10, wherein the communication network (70) is a communication network according to a telecommunications standard, preferably according to a Wireless Lan, WiMAX, 2G, 3G, 4G, or 5G telecommunications standard.

12. Network element (40) for providing a registration to a communication network (70) for a mobile terminal (10) which attempts to register or attach to a communication network, during a mobility management procedure (80), wherein the network element (40) is adapted for:
- receiving, via a Signalling Gateway (30), a registration request (201, 301; 401) of the mobile terminal (10), wherein the registration request (201, 301, 401) comprises registration information of the mobile terminal (10);
- sending a query (203, 303, 403) for checking the mobile terminal's budget from the network element (40) to a credit database (60), wherein the query (203, 303, 403) comprises at least partially the registration information from the registration request (201, 301, 401);
- sending a request answer (207, 307, 407) to the mobile terminal (10) in response to the registration request (201,301,401), wherein the registration request (201, 301,401) is acknowledged or wherein the registration request (201, 301, 401) is rejected together with the at least one reason of rejection.
wherein the network element (40) is a subscription database of the communication network (70).

13. Network element (40) according to claim 12, wherein the network element (40) comprises a credit indication database (41) comprising a credit indication related to the mobile terminal (10) and/or the user of the mobile terminal (10).

14. Network element (40) according to claim 13, wherein the credit indication comprises information whether the mobile terminal (10) and/or the user of the mobile terminal (10) has an unlimited access to the communication network (70), a conditional unlimited access to the communication network (70) or a restricted access to the communication network (70).

15. Network element (40) according to claim 13, wherein the network element (40) comprises a network element database and wherein the credit indication database (41) is integrated in the network element database.

16. Network element (40) according to one of the claim 12 to 15, wherein the network element (40) is a home subscriber server of a 4G communication network (70).

17. Network element (40) according to one of the claims 12 to 16, wherein the network element (40) is adapted to perform the method steps according to one of the claims 2 to 8.

## Patentansprüche

1. Verfahren durchgeführt von einem System, welches ein Netzwerkelement (40) umfasst, welches eine Teilnehmerdatenbank eines Kommunikationsnetzes zur Bereitstellung einer Registrierung in dem Kommunikationsnetz (70) für ein mobiles Endgerät (10) aufweist, welches versucht, sich während eines Mobilitätsmanagementverfahrens (80) in dem Kommunikationsnetz zu registrieren oder an das Kommunikationsnetz anzuschließen, mit den Schritten:
- Empfangen einer Registrierungsanfrage (201, 301; 401) des mobilen Endgerätes (10) seitens der Teilnehmerdatenbank des Kommunikationsnetzes (70) über ein Signalling Gateway (30), wobei die Registrierungsanfrage (201, 301, 401) Registrierungsinformationen des mobilen Endgerätes (10) aufweist;
- Senden einer Anfrage (203, 303, 403) von der Teilnehmerdatenbank an eine Kreditdatenbank (60), wobei die Anfrage zumindest teilweise die Registrierungsinformationen aus der Registrierungsanfrage (201, 301, 401) aufweist;
- Bewerten, ob das mobile Endgerät ein gültiges Budget aufweist, durch die Kreditdatenbank (60) auf der Basis der zumindest teilweisen Registrierungsinformationen der Anfrage (203, 303, 403) und Senden einer Anfrageantwort (205, 305, 405) als ein Ergebnis der Bewertung (204, 304, 404) an die Teilnehmerdatenbank, wobei die Anfrageantwort (205, 305, 405) bei einem negativen Ergebnis zumindest einen Abweisungsgrund aufweist; und
- Senden einer Anfrageantwort (207, 307, 407) von der Teilnehmerdatenbank an das mobile Endgerät (10) in Antwort auf die Registrierungsanfrage (201, 301, 401), wobei die Registrierungsanfrage (201, 301, 401) positiv bestätigt wird oder wobei die Registrierungsanfrage (201, 301, 401) zusammen mit dem zumindest einen Abweisungsgrund abgewiesen wird.

2. Verfahren gemäß Anspruch 1, welches nach dem Erhalt der Registrierungsanfrage (201, 301, 401) des mobilen Endgerätes (10) an der Teilnehmerdatenbank die weiteren Schritte aufweist:
- Extrahieren von Informationen bezüglich des mobilen Endgerätes (10) und/oder des Nutzers des mobilen Endgerätes (10) aus der empfangenen Registrierungsanfrage (201, 301, 401) seitens der Teilnehmerdatenbank;
- Überprüfen seitens einer mit der Teilnehmerdatenbank verbundenen Kreditangabedatenbank (60), ob die Kreditangabedatenbank (41) eine dem mobilen Endgerät (10) und/oder dem Nutzer des mobilen Endgerätes (10) zugehörige Kreditangabe aufweist; und
- wenn die Kreditangabedatenbank (60) die dem mobilen Endgerät (10) und/oder dem Nutzer des mobilen Endgerätes (10) zugehörige Kreditangabe aufweist, Überprüfen der Kreditangabe dahingehend, ob die Registrierungsanfrage (201, 301, 401) direkt positiv bestätigt werden kann, oder ob die Anfrage (203, 303, 403) von dem Netzelement (10) an die Kreditdatenbank (60) geschickt werden muss; und
- wenn die Kreditangabedatenbank (41) die dem mobilen Endgerät (10) und/oder dem Nutzer des mobilen Endgerätes (10) zugehörige Kreditangabe nicht aufweist, oder wenn die Überprüfung der Kreditangabe (202, 302) das Senden der Anfrage (203, 303, 403) erfordert, Fortfahren mit dem Schritt des Sendens der Anfrage (203, 303, 403) von der Teilnehmerdatenbank an die Kreditdatenbank (60).

3. Verfahren gemäß Anspruch 2, wobei der Schritt des Überprüfens der Kreditangabe (202, 302, 402) den Schritt aufweist:
- Überprüfen der dem mobilen Endgerät (10) und/oder dem Nutzer des mobilen Endgerätes (10) zugehörigen Kreditangabe, und zwar ob die Kreditangabe Informationen aufweist, ob das mobile Endgerät (10) und/oder der Nutzer des mobilen Endgerätes (10) unbegrenzten Zugang zu dem Kommunikationsnetz (70), einen vorbehaltlichen unbegrenzten Zugang zu dem Kommunikationsnetz (70) oder einen eingeschränkten Zugang zu dem Kommunikationsnetz (70) hat.

4. Verfahren gemäß Anspruch 3, wobei wenn die Kreditangabe angibt, dass das mobile Endgerät (10) einen unbegrenzten Zugang zu dem Kommunikationsnetz (70) hat, mit dem Senden der Anfrageantwort (207, 307, 407) von der Teilnehmerdatenbank an das mobile Endgerät (10) fortgefahren wird, wobei die Registrierungsanfrage (201, 301, 401) positiv bestätigt wird.

5. Verfahren gemäß Anspruch 3, wobei wenn die Kreditangabe angibt, dass das mobile Endgerät (10) einen vorbehaltlichen unbegrenzten Zugang zu dem Kommunikationsnetz (70) hat, ein weiteres Überprüfen der Bedingungen durch die Teilnehmerdatenbank und/oder die Kreditangabedatenbank (41) dahingehend erfolgt, ob die Registrierungsanfrage (201, 301, 401) direkt positiv bestätigt werden kann, oder ob die Anfrage (203, 303, 403) von der Teilnehmerdatenbank an die Kreditdatenbank (60) geschickt werden muss.

6. Verfahren gemäß Anspruch 5, wobei die ferner zu überprüfenden Bedingungen auf dem Aufenthaltsort des mobilen Endgerätes (10) und/oder des Nutzers des mobilen Endgerätes (10) und/oder der Zugangsnetztechnologie des Kommunikationsnetzes (70) basieren, in welchem sich das mobile Endgerät (10) oder der Nutzer des mobilen Endgerätes (10) befindet.

7. Verfahren gemäß Anspruch 6, wobei sich das mobile Endgerät (10) und/oder der Nutzers des mobilen Endgerätes (10) in einem heimatlichen Public Land Mobile Network (HPLMN) oder in einem besuchten Public Land Mobile Network (VPLMN) aufhält.

8. Verfahren gemäß Anspruch 3, wobei wenn die Kreditangabe angibt, dass das mobile Endgerät (10) einen eingeschränkten Zugang zu dem Kommunikationsnetz (70) hat, mit dem Schritt des Sendens der Anfrage (203, 303, 403) von der Teilnehmerdatenbank an die Kreditangabedatenbank (60) fortgefahren wird.

9. Verfahren gemäß einem der Ansprüche 1 bis 8, wobei die Registrierungsinformationen der Registrierungsanfrage (201, 301, 401) des mobilen Endgerätes (10) zumindest eine Nutzeridentität, einen Funkzugangstechnologie-Indikator und/oder einen besuchten Kommunikationsnetz-Indikator zur Bereitstellung der Registrierung in dem Kommunikationsnetz (70) aufweisen.

10. Verfahren gemäß einem der Ansprüche 1 bis 9, wobei zumindest die Anfrage (203, 303, 403) und die Anfrageantwort (205, 305, 405) auf dem standardisierten Diameter Protokoll basieren.

11. Verfahren gemäß einem der Ansprüche 1 bis 10, wobei das Kommunikationsnetz (70) ein Kommunikationsnetz gemäß einem Telekommunikationsstandard ist, vorzugsweise gemäß einem Wireless Lan, WiMAX, 2G, 3G, 4G oder 5G Telekommunikationsstandard.

12. Netzwerkelement (40) zur Bereitstellung einer Registrierung seitens eines Kommunikationsnetzes (70) für ein mobiles Endgerät (10), das versucht, sich während eines Mobilitätsmanagementverfahrens (80) in dem Kommunikationsnetz zu registrieren oder an das Kommunikationsnetz anzuschließen, wobei das Netzwerkelement (40) eingerichtet ist, zum:
- Empfangen einer Registrierungsanfrage (201, 301; 401) des mobilen Endgerätes (10) über ein Signalling Gateway (30), wobei die Registrierungsanfrage (201, 301, 401) Registrierungsinformationen des mobilen Endgerätes (10) aufweist;
- Senden einer Anfrage (203, 303, 403) zur Überprüfung des Budgets des mobilen Endgerätes von dem Netzwerkelement (40) an eine Kreditdatenbank (60), wobei die Anfrage zumindest teilweise die Registrierungsinformationen aus der Registrierungsanfrage (201, 301, 401) aufweist;
- Senden einer Anfrageantwort (207, 307, 407) an das mobile Endgerät (10) in Antwort auf die Registrierungsanfrage (201, 301, 401), wobei die Registrierungsanfrage (201, 301, 401) positiv bestätigt wird oder wobei die Registrierungsanfrage (201, 301, 401) zusammen mit dem zumindest einen Abweisungsgrund abgewiesen wird,
wobei das Netzwerkelement (40) eine Teilnehmerdatenbank des Kommunikationsnetzes (70) ist.

13. Netzwerkelement (40) gemäß Anspruch 12, wobei das Netzwerkelement (40) eine Kreditangabedatenbank (41) mit einer dem mobilen Endgerät (10) und/oder dem Nutzer des mobilen Endgerätes (10) zugehörigen Kreditangabe aufweist.

14. Netzwerkelement (40) gemäß Anspruch 13, wobei die Kreditangabe Informationen aufweist, ob das mobile Endgerät (10) und/oder der Nutzer des mobilen Endgerätes (10) unbegrenzten Zugang zu dem Kommunikationsnetz (70), einen vorbehaltlichen unbegrenzten Zugang zu dem Kommunikationsnetz (70) oder einen eingeschränkten Zugang zu dem Kommunikationsnetz (70) hat.

15. Netzwerkelement (40) gemäß Anspruch 13, wobei das Netzwerkelement (40) eine Netzwerkelementdatenbank aufweist und wobei die Kreditangabedatenbank (41) in die Netzwerkelementdatenbank integriert ist.

16. Netzwerkelement (40) gemäß einem der Ansprüche 12 bis 15, wobei das Netzwerkelement (40) ein Heimat-Teilnehmer-Server eines 4G-Kommunikationsnetzes (70) ist.

17. Netzwerkelement (40) gemäß einem der Ansprüche 12 bis 16, wobei das Netzwerkelement (40) eingerichtet ist, die Verfahrensschritte gemäß einem der Ansprüche 2 bis 8 auszuführen.

## Revendications

1. Procédé effectué par un système comprenant un élément de réseau (40), qui est une base de données d'abonnés d'un réseau de communication, pour fournir un enregistrement au réseau de communication (70) pour un terminal mobile (10), qui essaie de s'enregistrer ou de se joindre au réseau de communication pendant une procédure de gestion de mobilité (80), comprenant les étapes de :
- recevoir, via une passerelle de signalisation (30), une demande d'enregistrement (201, 301 ; 401) du terminal mobile (10) à la base de données d'abonnés du réseau de communication (70), dans lequel la demande d'enregistrement (201, 301, 401) comprend des informations d'enregistrement du terminal mobile (10) ;
- envoyer une requête (203, 303, 403) à partir de la base de données d'abonnés à une base de données de crédit (60), dans lequel la requête (203, 303, 403) comprend au moins partiellement les informations d'enregistrement de la demande d'enregistrement (201, 301, 401) ;
- évaluer par la base de données de crédit (60), si le terminal mobile a un budget valable sur la base des informations d'enregistrement au moins partielles de la requête (203, 303, 403) et envoyer une réponse à la requête (205, 305, 405) comme un résultat de l'évaluation (204, 304, 404) à la base de données d'abonnés, dans lequel la réponse à la requête (205, 305, 405) comprend au moins une raison de refus dans le cas d'un résultat négatif ; et
- envoyer une réponse à la requête (207, 307, 407) à partir de la base de données d'abonnés au terminal mobile (10) en réponse à la demande d'enregistrement (201, 301, 401), dans lequel la demande d'enregistrement (201, 301, 401) est acceptée ou dans lequel la demande d'enregistrement (201, 301, 401) est refusée ensemble avec l'au moins une raison de refus.

2. Procédé selon la revendication 1 comprenant, après avoir reçu la demande d'enregistrement (201, 301, 401) du terminal mobile (10) à la base de données d'abonnés, les autres étapes de :
- extraire, à la base de données d'abonnés, des informations concernant le terminal mobile (10) et/ou l'utilisateur du terminal mobile (10) dans la demande d'enregistrement (201, 301, 401) reçue ;
- vérifier dans une base de données d'indication de crédit (60) liée à la base de données d'abonnés si la base de données d'indication de crédit (41) comprend une indication de crédit liée au terminal mobile (10) et/ou à l'utilisateur du terminal mobile (10) ; et
- si la base de données d'indication de crédit (60) comprend l'indication de crédit liée au terminal mobile (10) et/ou à l'utilisateur du terminal mobile (10), vérifier par rapport à l'indication de crédit si la demande d'enregistrement (201, 301, 401) peut être directement acceptée ou si la requête (203, 303, 403) doit être envoyée à partir de l'élément de réseau (10) à la base de données de crédit (60) ; et
- si la base de données d'indication de crédit (41) ne comprend pas l'indication de crédit liée au terminal mobile (10) et/ou à l'utilisateur du terminal mobile (10) ou si la vérification de l'indication de crédit (202, 302) demande l'envoi de la requête (203, 303, 403), il faut poursuivre avec l'étape d'envoyer la requête (203, 303, 403) à partir de la base de données d'abonnés à la base de données de crédit (60).

3. Procédé selon la revendication 2, dans lequel l'étape de vérifier l'indication de crédit (202, 302, 402) comprend l'étape de :
- vérifier l'indication de crédit liée au terminal mobile (10) et/ou à l'utilisateur du terminal mobile (10) si l'indication de crédit comprend des informations sur le fait si le terminal mobile (10) et/ou l'utilisateur du terminal mobile (10) a un accès illimité au réseau de communication (70), un accès illimité conditionnel au réseau de communication (70) ou un accès restreint au réseau de communication (70).

4. Procédé selon la revendication 3, dans lequel si l'indication de crédit indique que le terminal mobile (10) a un accès illimité au réseau de communication (70), il faut poursuivre avec l'envoi de la réponse à la requête (207, 307, 407) à partir de la base de données d'abonnés au terminal mobile (10), la demande d'enregistrement (201, 301, 401) étant acceptée.

5. Procédé selon la revendication 3, dans lequel si l'indication de crédit indique que le terminal mobile (10) a un accès illimité conditionnel au réseau de communication (70), il faut vérifier encore les conditions par la base de données d'abonnés et/ou par la base de données d'indication de crédit (41) et déterminer si la demande d'enregistrement (201, 301, 401) peut être directement acceptée ou si la requête (203, 303, 403) doit être envoyée à partir de la base de données d'abonnés à la base de données de crédit (60).

6. Procédé selon la revendication 5, dans lequel les conditions à vérifier encore se fondent sur l'emplacement du terminal mobile (10) et/ou de l'utilisateur du terminal mobile (10) et/ou sur la technologie d'accès au réseau du réseau de communication (70), dans lequel le terminal mobile (10) ou l'utilisateur du terminal mobile (10) se trouve.

7. Procédé selon la revendication 6, dans lequel le terminal mobile (10) ou l'utilisateur du terminal mobile (10) se trouve dans un réseau mobile terrestre public de départ (HPLMN) ou dans un réseau mobile terrestre public visité (VPLMN).

8. Procédé selon la revendication 3, dans lequel si l'indication de crédit indique que le terminal mobile (10) a un accès restreint au réseau de communication (70), il faut poursuivre avec l'étape d'envoyer la requête (203, 303, 403) à partir de la base de données d'abonnés à la base de données de crédit (60).

9. Procédé selon l'une des revendications 1 à 8, dans lequel les informations d'enregistrement de la demande d'enregistrement (201, 301, 401) du terminal mobile (10) comprennent au moins l'identité d'un utilisateur, un indicateur de technologie d'accès radioélectrique et/ou un indicateur de réseau de communication visité pour assurer un enregistrement dans le réseau de communication (70).

10. Procédé selon l'une des revendications 1 à 9, dans lequel au moins la requête (203, 303, 403) et la réponse à la requête (205, 305, 405) sont basées sur le protocole DIAMETER standardisé.

11. Procédé selon l'une des revendications 1 à 10, dans lequel le réseau de communication (70) est un réseau de communication selon un standard de télécommunication, de préférence selon un standard de télécommunication Wireless Lan, WiMAX, 2G, 3G, 4G ou 5G.

12. Elément de réseau (40) pour fournir un enregistrement dans un réseau de communication (70) à un terminal mobile (10), qui essaie de s'enregistrer ou de se joindre à un réseau de communication pendant une procédure de gestion de mobilité (80), dans lequel l'élément de réseau (40) est adapté à :
- recevoir, via une passerelle de signalisation (30), une demande d'enregistrement (201, 301 ; 401) du terminal mobile (10), dans lequel la demande d'enregistrement (201, 301, 401) comprend des informations d'enregistrement du terminal mobile (10) ;
- envoyer une requête (203, 303, 403) pour vérifier le budget du terminal mobile à partir de l'élément de réseau (40) à une base de données de crédit (60), dans lequel la requête (203, 303, 403) comprend au moins partiellement les informations d'enregistrement de la demande d'enregistrement (201, 301, 401) ;
- envoyer une réponse à la requête (207, 307, 407) au terminal mobile (10) en réponse à la demande d'enregistrement (201, 301, 401), dans lequel la demande d'enregistrement (201, 301, 401) est acceptée ou dans lequel la demande d'enregistrement (201, 301, 401) est refusée ensemble avec l'au moins une raison de refus,
dans lequel l'élément de réseau (40) est une base de données d'abonnés du réseau de communication (70).

13. Elément de réseau (40) selon la revendication 12, dans lequel l'élément de réseau (40) comprend une base de données d'indication de crédit (41) comprenant une indication de crédit liée au terminal mobile (10) et/ou à l'utilisateur du terminal mobile (10).

14. Elément de réseau (40) selon la revendication 13, dans lequel l'indication de crédit comprend des informations par rapport au fait si le terminal mobile (10) et/ou l'utilisateur du terminal mobile (10) a un accès illimité au réseau de communication (70), un accès illimité conditionnel au réseau de communication (70) ou un accès restreint au réseau de communication (70).

15. Elément de réseau (40) selon la revendication 13, dans lequel l'élément de réseau (40) comprend une base de données d'élément de réseau et dans lequel la base de données d'indication de crédit (41) est intégrée dans la base de données d'élément de réseau.

16. Elément de réseau (40) selon l'une des revendications 12 à 15, dans lequel l'élément de réseau (40) est un serveur d'abonné résidentiel d'un réseau de communication 4G (70).

17. Elément de réseau (40) selon l'une des revendications 12 à 16, dans lequel l'élément de réseau (40) est adapté à effectuer les étapes de procédé selon l'une des revendications 2 à 8.
